(19) Europäisches Patentamt / European Patent Office / Office européen des brevets

(11) **EP 1 883 278 A1**

(12) **EUROPEAN PATENT APPLICATION**
published in accordance with Art. 153(4) EPC

(43) Date of publication:
**30.01.2008 Bulletin 2008/05**

(51) Int Cl.:
*H05B 41/24* (2006.01)   *H01J 61/88* (2006.01)
*H01J 61/12* (2006.01)   *H01J 61/30* (2006.01)

(21) Application number: **06729792.9**

(22) Date of filing: **23.03.2006**

(86) International application number:
**PCT/JP2006/305844**

(87) International publication number:
**WO 2006/120806 (16.11.2006 Gazette 2006/46)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **12.05.2005 JP 2005139458**

(71) Applicant: **Harison Toshiba Lighting Corp. Imabari-shi, Ehime 794-8510 (JP)**

(72) Inventors:
• **TAMAI, Kouichi**
  **c/o HARISON TOSHIBA LIGHTING Corp.**
  **Imabari-shi,**
  **Ehime 7948510 (JP)**
• **ISHIGAMI, Toshihiko,**
  **HARISON TOSHIBA LIGHTING Corp**
  **Imabari-shi,**
  **Ehime 7948510 (JP)**

(74) Representative: **Cheyne, John Robert Alexander M.**
  **HASELTINE LAKE**
  **Redcliff Quay**
  **120 Redcliff Street**
  **Bristol BS1 6HU (GB)**

(54) **METAL HALIDE DISCHARGE LAMP AND METAL HALIDE DISCHARGE LAMP SYSTEM**

(57)     [Problems]

To provide a metal halide discharge lamp essentially not having mercury that is lighted stably so that a discharge arc is corrected into the straight state against the gravity induced convection using an acoustic resonance phenomenon, and a metal halide discharge lamp system for lighting the same.

[Means of solving problems]

A metal halide discharge lamp MHL includes a fire-resistant and light-transmitting hermetic vessel 1 with the maximum inner diameter of 2.0 to 12.0 mm, a pair of electrodes 2A, 2B, and a discharge medium containing a halide and a rare gas and essentially not containing mercury and sealed within the hermetic vessel, wherein the discharge arc is stably made into straight even if the lamp is lighted by flowing an electric current superimposed with a ripple current with either of a predetermined frequency in a range of a relatively low first frequency f1 satisfying an equation 1 (unit: kHz) and a relatively high second frequency f2 satisfying an equation 2 (unit: kHz) in the hermetic vessel.

FIG. 1

EP 1 883 278 A1

**Description**

TECHNICAL FIELD

The present invention relates to a metal halide discharge lamp essentially not having mercury sealed and a metal halide discharge lamp system for lighting the same.

BACKGROUND ART

Recently, a high-intensity discharge lamp (HID lamp) has been widely used in the outdoor lighting field because of its characteristics of high efficiency and long life. Among them, a metal halide lamp has a favorable color rendering properties and is spreading not only in the outdoor lighting field but also in the indoor lighting field, utilizing its characteristics and also drawing attention as light sources for video equipment and for head lamp of a vehicle. The conventional metal halide lamp used in general has mercury vapor sealed along with a rare gas as a buffer (hereinafter referred to as "lamp with mercury" for convenience).

When the metal halide lamp is lighted by configuration of a conventional generally-used metal halide lamp lighting device, a temperature at a center part of a discharge arc can reach approximately 5000K and the temperature drops with a predetermined temperature gradient from the arc center part to 1000K in the vicinity of a tube wall. Therefore, when the metal halide lamp is horizontally lighted, gas heated at the arc center part and having a reduced density is moved upward and the gas with a larger density in the vicinity of the tube wall flows into the arc center, which is called as a convection phenomenon. The discharge arc results to be located close to the above from a virtual straight tube axis connecting a pair of electrodes due to the gas flow by the convection. That is, the discharge arc is curved upward.

Curvature of the discharge arc causes the following problems:

1. A distance between a wall surface of the hermetic vessel at an upper part of a discharge space and the discharge arc gets small, a temperature rise of the relevant portion in the hermetic vessel becomes large, and silica glass constituting the hermetic vessel is easily deteriorated. When the silica glass at the relevant portion is deteriorated, a light flux is lowered and the drop of the light collecting efficiency when combined with the reflecting mirror gets large.

2. The silica glass in the hermetic vessel is easily softened, deformation (expansion) occurs due to the softening, internal volume of the discharge space is increased, and the light emitting characteristics are changed.

3. Temperature drop at a lower part in the discharge space is caused, a coldest temperature determining an operation pressure in the discharge lamp discharge space is lowered, and the light emitting characteristics are lowered.

4. When the metal halide lamp is used in combination with the reflecting mirror, a discharge arc is arranged on an optical axis of the reflecting mirror in general, but since the shape of the discharge arc becomes vertically asymmetric with respect to the optical axis of the reflecting mirror, the sectional shapes of the discharge arc including the optical axis of the reflecting mirror are all different in the entire circumferential direction surrounding the optical axis. Therefore, it is necessary to design the reflecting mirror, considering the different shapes of the discharge arc in the sections in the entire circumferential direction surrounding the optical axis of the reflecting mirror and thus, the design is complicated and as a result, the shape of the reflecting mirror also becomes complicated.

Various measures have been come up with for correcting the curvature of discharge arc. As an example, a lighting method for correcting the discharge arc into the straight state against the gravity induced convection using an acoustic resonance phenomenon (hereinafter referred to as "straight arc lighting method" for convenience) is known (See Patent Documents 1, 2). When the discharge arc is corrected to the straight state using this strait lighting method, temperature distribution in the hermetic vessel is relatively equalized and local temperature rise in the hermetic vessel (temperature rise at an upper part in the case of horizontal lighting) is reduced so that deterioration and deformation of silica glass can be prevented. Also, by raising a coldest temperature at the lower part in the discharge space, the light emitting efficiency can be improved. Moreover, since the optical axis of the reflecting mirror can be made substantially in the same shape in the entire circumferential direction, a design of one section can be applied to the other sections, by which design of the reflecting mirror is extremely facilitated. As a result, the shape of the reflecting mirror becomes simple.

A metal halide lamp having no mercury sealed was invented by the present inventors (See Patent Document 3) and development for putting it into practice has been actively promoted since then. Such a lamp for an automobile head lamp has been in practical use since July 2004. The metal halide lamp having no mercury sealed (hereinafter referred to as "mercury-free lamp" for convenience) is environmentally preferable since no mercury is used therein and has several advantages such as favorable rising property in spectroscopic characteristics at start, suitability for dimming, and little variation in lamp characteristics. The metal halide lamp of this configuration is expected to further spread.

Patent Document 1: Japanese Patent Publication No. 07-009835

Patent Document 2: Japanese Patent No. 3189609
Patent Document 3: Japanese Patent Laid-Open No. 11-238488

## DISCLOSURE OF INVENTION

### PROBLEM TO BE SOLVED BY THE INVENTION

The mercury free lamp has tendency that the discharge arc is relatively narrowed and thinned as compared with a lamp with mercury. As a result, the curvature caused by gravity induced convection of the discharge arc is larger than the metal halide lamp having mercury sealed (hereinafter referred to as "lamp with mercury" for convenience". Thus, the measures against discharge arc curvature is required.

Then, the inventors conceived employment of the straight arc lighting method in order to correct the curvature of the discharge arc in the mercury free lamp and conducted experiments.

However, it was found that a stable straight arc can not be obtained even if the configuration described in Patent Documents 1, 2 is employed as it is. The causes are examined and found to be as follows.

That is, in the case of the mercury free lamp, the curvature of the discharge arc becomes large as mentioned above, which causes a state that temperature distribution in the discharge space becomes different from that in the case of a lamp with mercury and due to other differences such as no inclusion of mercury with a large molecular weight, it is assumed that an average sonic speed in the discharge space is different and a frequency of an electric current for stable straightness is changed.

Next, the inventors performed various tests by making various mercury free lamps by way of trial, flowing a lamp current including a high-frequency ripple and lighting them. As a result, configuration of a metal halide discharge lamp for stable straight lighting is found in the end and the present invention is achieved.

The present invention has an object to provide a mercury free metal halide discharge lamp which is lighted stably and a metal halide discharge lamp system for lighting the same by correcting the discharge arc into a substantially straight state against the gravity induced convection using the acoustic resonance phenomenon.

### MEANS FOR SOLVING PROBLEM

The metal halide discharge lamp of the present invention comprises:

a fire-resistant and light-transmitting hermetic vessel with the maximum inner diameter of 2.0 to 12.0 mm;
a pair of electrodes sealed in the hermetic vessel; and
a discharge medium containing a halide and a rare gas and essentially not containing mercury and sealed within the hermetic vessel,

wherein the discharge arc is stably made into straight even if the lamp is lighted by flowing an electric current superimposed with a ripple current with either of a predetermined frequency in a range of a relatively low first frequency f1 satisfying an equation 1 (unit: kHz) and a relatively high second frequency f2 satisfying an equation 2 (unit: kHz) in the hermetic vessel.

$$[\text{Equation 1}]$$

$$70 \leq f1 \leq 130$$

$$[\text{Equation 2}]$$

$$120 \leq f2 \leq 260$$

### EFFECT OF THE INVENTION

According to the present invention, a mercury free metal halide discharge lamp which is stably lighted by correcting the discharge arc into a substantially straight state against the gravity induced convection using the acoustic resonance phenomenon and the metal halide discharge lamp system for lighting it can be provided.

BRIEF DESCRIPTION OF DRAWINGS

[Fig. 1] Fig. 1 is a front view of an entire lamp illustrating a metal halide lamp for an automobile head lamp as a first mode for putting a metal halide lamp of the present invention into practice.
[Fig. 2] Fig. 2 is a plan view of the same.
[Fig. 3] Fig. 3 is an enlarged front view of a light emitting tube of the same.
[Fig. 4] Fig. 4 is an enlarged front view of a light emitting tube illustrating a metal halide lamp for a liquid crystal projector as a second mode for putting the metal halide lamp of the present invention into practice.
[Fig. 5] Fig. 5 is a circuit block diagram illustrating a mode for putting a metal halide discharge lamp system of the present invention into practice.

EXPLANATIONS OF LETTERS OR NUMERALS

| 1 | Hermetic vessel |
|---|---|
| 1a | Surrounding portion |
| 1b | Sealing portion |
| 1d | Sealing tube |
| 1c | Discharge space |
| 2A, 2B | Electrode |
| 3A, 3B | External lead-in line |
| 4 | Sealing metal foil |
| B | Base |
| IT | Light emitting tube |
| MHL | Metal halide discharge lamp |
| OT | Outer tube |

BEST MODE(S) FOR CARRYING OUT THE INVENTION

Major allowable modes of each constituent element when putting the present invention into practice will be described below.

The hermetic vessel should be fire-resistant and light-transmitting. Also, the maximum inner diameter of a portion dividing the discharge space can be set within a range of 2.0 to 12.0 mm according to the application of the lamp as appropriate. The above range is mainly employed for a small-sized metal halide discharge lamp. For example, as a lamp for a head lamp, the maximum inner diameter in a range of 2.0 to 4.0 mm is suitable. For projection such as a liquid crystal projector, the maximum inner diameter should be in a range of 5.0 to 1.2 mm. For other general illumination, the maximum inner diameter can be selected as appropriate in a range of 2.0 to 12.0 mm according to its specific application. If the maximum inner diameter of the hermetic vessel is less than 2.0 mm, the inner diameter of the discharge space is too small and an inner surface of the hermetic vessel restricts the curvature of the discharge arc. Thus, there is substantially no necessity for straight arc lighting by superimposing a ripple current any more. With regard to the metal halide discharge lamp with the maximum inner diameter exceeding 12.0 mm, on the contrary, since the curvature of the discharge arc is increased corresponding to increase of the maximum inner diameter of the hermetic vessel, the discharge arc can hardly be made straight.

The "fire-resistant and light-transmitting" hermetic vessel means that the hermetic vessel may be made from any material as long as it is provided with fire resistance which sufficiently withstands normal operating temperature of the discharge lamp and is capable of leading out light in a desired wavelength region generated by the discharge. Therefore, polycrystal such as silica glass, light-transmitting alumina, YAG or the like or single crystal ceramics can be used. A halogen-resistant or metal-resistant transparent film may be formed on an inner surface of the hermetic vessel or the inner surface of the hermetic vessel may be reformed.

The hermetic vessel is comprised by a surrounding portion and a pair of sealing portions in general. The surrounding portion provides a hollow portion functioning as a discharge space formed in an appropriate shape therein, such as a sphere, oval sphere or substantial column or the like. The discharge space can be made substantially columnar preferably for a metal halide lamp for a head lamp. By this, when the discharge arc is to be curved upward in horizontal lighting, it approaches the inner surface on the upper side of the discharge vessel, by which the temperature rise at the upper part of the discharge vessel is expedited. If the hermetic vessel is made of silica glass, the thickness of the surrounding portion can be made relatively large. That is, the thickness substantially at the center part of the distance between said pair of electrodes can be made larger than the thickness on the both sides. By this, since heat conductivity of the discharge vessel is improved and the temperature rise of the discharge medium adhering to the inner surface on the lower part and the side part of the discharge space of the discharge vessel is expedited, rising of the light flux is accelerated. If the hermetic vessel is made of light-transmitting ceramics, the surrounding portion is preferably formed with substantially uniform thickness.

The pair of sealing portions seal the surrounding portion, support shaft portions of the electrodes, constitute means that contributes to leading-in of electric current from an operating circuit to the electrodes in a hermetic manner, and also extend integrally from both ends of the surrounding portion. In order to seal the electrodes and to lead in the electric current from the operating circuit to the electrodes in a hermetic manner, preferably if the material of the hermetic vessel is silica glass, a sealing metal foil is embedded in a hermetic manner as appropriate hermetic sealing and leading-in means inside the sealing portions. If the hermetic vessel is made of light-transmitting ceramics, such configuration can be employed that the sealing portions are formed as small-diameter cylinder portions as employed in general and electrode shafts are inserted so that a slight clearance called as a capillary is formed inside the small-diameter cylinder portions, a gap between lead-in conductors inserted through the ends of the small-diameter cylinder portions and the small-diameter cylinder portions is sealed and the distal ends of the lead-in conductors and the base ends of the electrode shafts are bonded to each other.

The sealing metal foil is the means embedded inside the sealing portions and functioning as a current conducting conductor in cooperation with the sealing portions so that the sealing portions maintain the inside of the surrounding portion in the hermetic vessel in a hermetic manner, and if the hermetic vessel is made of silica glass, molybdenum (Mo) is optimal as a material. Since molybdenum is oxidized approximately at 350°C, it is embedded so that the temperature of the end of the outer side falls below this. A method for embedding the sealing metal foil in the sealing portion is not particularly limited, but a reduced pressure sealing method, pinch seal method or combination of them can be selected and employed as appropriate. In the case of a metal halide lamp used for a small-sized automobile head lamp which is provided with a hermetic vessel having the maximum inner diameter of 2.0 to 4.0 mm and in which 6 atmospheres or more of a rare gas such as xenon (Xe) is sealed at a room temperature, the latter is more preferable. To one end on the side of the surrounding portion of the sealing metal foil, the base end of the electrode, which will be described later, is connected, while to the other end, the distal end of an external lead-in wire is connected. The base end side of the external lead-in wire is exposed to the outside from the end face of the sealing portion.

The pair of electrodes are sealed inside the hermetic vessel while they are separated and opposed. The distance between said pair of electrodes is preferably 6 mm or less when the maximum inner diameter of the hermetic vessel is in a range of 2.0 to 12.0 mm, for example, in the case of a small-sized metal halide discharge lamp used for projection used as a liquid crystal projector or a head lamp of a mobile such as an automobile or for general illumination. In the case of the liquid crystal projector, the distance is preferably 3 mm or less, for example 1 mm, and it may be 0.5 mm if desired. The distance of 4.2 mm as a center value is standardized for a head lamp. The electrode is provided with a shaft portion whose diameter is preferably formed in the identical straight rod state along the longitudinal direction. The diameter of the shaft portion is preferably 0.25 mm or more and more preferably 0.45 mm or less. The shaft portion is formed so that it reaches the distal end without having the diameter increased from the shaft portion and the distal end forms a flat end face or the distal end to be a starting point of an arc forms a curved surface or a truncated cone. Alternatively, a portion with a diameter larger than the shaft portion can be formed at the distal end of the shaft portion.

Also, the metal halide lamp of the present invention may be in a mode of being lighted in a single polarity in which the polarity of an electric current flowing through the hermetic vessel is not changed with time, that is, dc lighting or may be in a mode of being lighted in which the polarity of the electric current flowing through the hermetic vessel, in other words, the polarity is alternately changed with time, that is, ac lighting. In the case of the former, the electrode on the side functioning as an anode has rapid temperature rise and a larger heat radiation area than a cathode and thus, a thicker electrode main portion at the distal end can be used. In the case of the latter, the pair of electrodes are configured to have the same structure in general.

Moreover, the pair of electrodes can be formed using a fire-resistant and conductive metal such as genuine tungsten (W), doped tungsten containing a doping agent, thoriated tungsten containing thorium oxide, rhenium (Re) or tungsten - rhenium (W-Re) alloy. In the case for dc lighting, at least the electrode main portion of the electrode functioning as the cathode preferably uses an electrode material whose electron emissive property is favorable such as thoriated tungsten. Then, total flux can be increased as will be described later.

The discharge medium is sealed inside the hermetic vessel and acts as a medium to generate discharge in a vapor or gas state and contains at least a halide of a light emitting metal and a rare gas. However, mercury (Hg) is not sealed essentially. Also, when a halide of a metal mainly contributing to light emission of a visible region as a metal halide discharge lamp is a first halide, the halides may contain a second halide that is smaller in a light emission volume in the visible region than the first halogen and mainly contributes to formation of a lamp voltage in addition. The light emission volume in the visible region by the metal of the second halide can be small when seen as the entire visible region, and irradiation energy may be larger than light emission by the metal of the first halide in a narrow specific wavelength region, for example. The first and second halides will be described below in more detail.

The first halide is made of a metal halide that emits light mainly as a metal halide discharge lamp. A metal for this purpose may be selected from a known group of various metals generating irradiation of a desired wavelength region according to the application of the metal halide lamp as appropriate and one or more of them can be used.

As a metal halide discharge lamp for an automobile head lamp, for example, a halide of sodium (Na) and scandium (Sc) is preferably used as a major component of the first halide, since white light conforming to the standard can be emitted efficiently. Also, for the purpose of adjustment of chromaticity of light emission, halides of rare-earth metal such as dysprosium (Dy), neodymium (Nd), holmium (Ho) and thulium (Tm) and halides of one or more types of metal consisting of a group of thallium (Tl) and indium (In) can be used as an auxiliary component.

For a metal halide discharge lamp for projection such as a liquid crystal projector, at least one type selected from halides of rare-earth metal such as dysprosium (Dy), neodymium (Nd), holmium (Ho) and thulium (Tm) and the like can be used as a main component. Also, for the purpose of adjustment of light emission efficiency and chromaticity of light emission, halides of one or more types of metal consisting of a group of sodium (Na), indium (In) and thallium (Tl) can be used as an auxiliary component.

As the first halide, not only the above examples but various known metal halides for light emission can be used according to the application of the metal halide discharge lamp.

For the second halide, a main component can be constituted by a plurality of types of metal halide selected from the following group. That is, the second halide can be one or more types of halides selected from the group of magnesium (Mg), iron (Fe), cobalt (Co), chromium (Cr), zinc (Zn), nickel (Ni), manganese (Mn), aluminum (Al), antimony (Sb), beryllium (Be), rhenium (Re), gallium (Ga), titanium (Ti), zirconium (Zr) and hafnium (Hf). Any of the metals belonging to the above group has the characteristic under coexistence with the metal of the first halide that light-emitting volume in the visible region is relatively smaller as compared with the first halide, and its vapor pressure is relatively high. One or more types of halides selected from the group consisting of iron (Fe), zinc (Zn), manganese (Mn), aluminum (Al) and gallium (Ga) is particularly preferable. However, these metals are optimal when used as a main component, but the lamp voltage can be further raised by adding one or more types of metal selected from the group of magnesium (Mg), cobalt (Co), chromium (Cr), nickel (Ni), antimony (Sb), beryllium (Be), rhenium (Re), titanium (Ti), zirconium (Zr) and hafnium (Hf) as an auxiliary component. Also, any of the metals of the above group is basically adaptive even if the hermetic vessel is formed of any of silica glass and light-transmitting ceramics.

As halogen constituting the halide, iodine is the most suitable in halogens in terms of reactivity, and at least the above main light-emitting metal is sealed mainly as iodides. However, if necessary, different halides such as iodides and bromides can be used at the same time for the purpose of restraining blackening of the inner surface of the hermetic vessel.

A rare gas acts as a start gas and a buffer gas of a metal halide lamp, and one or more types from a group of argon (Ar), krypton (Kr) and xenon (Xe) can be sealed singularly or in a mixed state. Since xenon has more atomic weight than other rare gases, which results in relatively small heat conductivity, sealing-in of 5 atmospheres or more of this gas contributes to formation of a lamp voltage immediately after lighting, and a vapor pressure of halides emits white visible light at a lower stage, which contributes to rising of a light flux. Thus, xenon is effective as a metal halide lamp for a head lamp. In this case, a preferable sealing-in pressure of xenon is 6 atmospheres or more, or more preferably in a range of 8 to 16 atmospheres. By this, the light flux rising immediately after lighting and the above standard of white light emission as an HID light source for an automobile head lamp can be both satisfied.

Moreover, reference shall be made to mercury. In the present invention, it is preferable that mercury (Hg) is not included at all from the viewpoint of reduction in environmental load substances but inclusion to an extent of an impurity is allowed.

In the present invention, the lighting mode of the metal halide discharge lamp may be any of so-called dc lighting or ac lighting as mentioned above. In the case of the former, the polarity (polarity) of an electric current (lamp current) flowing in the hermetic vessel at lighting is not changed (constant) but a single polarity. In the case of the latter, the polarity (polarity) of the electric current (lamp current) flowing in the hermetic vessel at lighting is both polarities, which means the polarity alternately changes with time. In any case, a high-frequency ripple current is superimposed on an electric current of a basic wave. It is configured so that the discharge arc is stably made into straight even when being lighted with the current in which the high-frequency ripple current with a predetermined frequency in a range of a relatively low first frequency $f_1$ satisfying an equation 1 (unit: kHz) or a predetermined frequency in a range of a relatively high second frequency satisfying an equation 2 (unit: kHz) is flown in the hermetic vessel.

The predetermined frequency in a range of the relatively low first frequency $f_1$ and the predetermined frequency in a range of the relatively high second frequency satisfying the equation 2 (unit: kHz) are classified into narrower ranges according to the size of the maximum inner diameter of the hermetic vessel as shown in Table 1.

[Table 1]

| Maximum inner diameter of hermetic vessel (mm) | First frequency f1 (kHz) | Second frequency f2 (kHz) |
|---|---|---|
| 2.0 | 70 to 80 | 250 to 260 |
| 2.2 to 2.8 | 80 to 130 | 170 to 250 |
| 3.0 to 12.0 | 100 to 120 | 120 to 160 |

According to the present invention, if the frequency of the ripple current to be superimposed on the basic wave of the lamp current is the predetermined frequency in the respective ranges of the first frequency f1 and the relatively high second frequency f2 satisfying the equation 2 (unit: kHz), as shown in the equation 1, the equation 2 and Table 1, the discharge arc is stably made into straight, but it was found that the second frequency f2 stabilizes the straightening action more surely and easily.

Next, the metal halide discharge lamp system including the metal halide discharge lamp of the present invention comprises the metal halide discharge lamp described as above and an operating circuit supplying an electric current having a frequency component generating an acoustic resonance phenomenon in a direction crossing the straight line connecting the electrodes of the metal halide discharge lamp to the metal halide discharge lamp for lighting.

In this system, the operating circuit is preferably computerized and configured so that an electric current of 2.5 times or more of a rated lamp current is supplied for several seconds, preferably 3 to 5 seconds immediately after the metal halide discharge lamp is lighted and the electric current is reduced as time elapses. Also, the circuit may be configured so that the modulation degree of the high-frequency ripple current superimposed on the dc basic wave as desired can be adjusted continuously or in steps.

A mode for carrying out the present invention will be described below referring to the attached drawings.

<First mode>

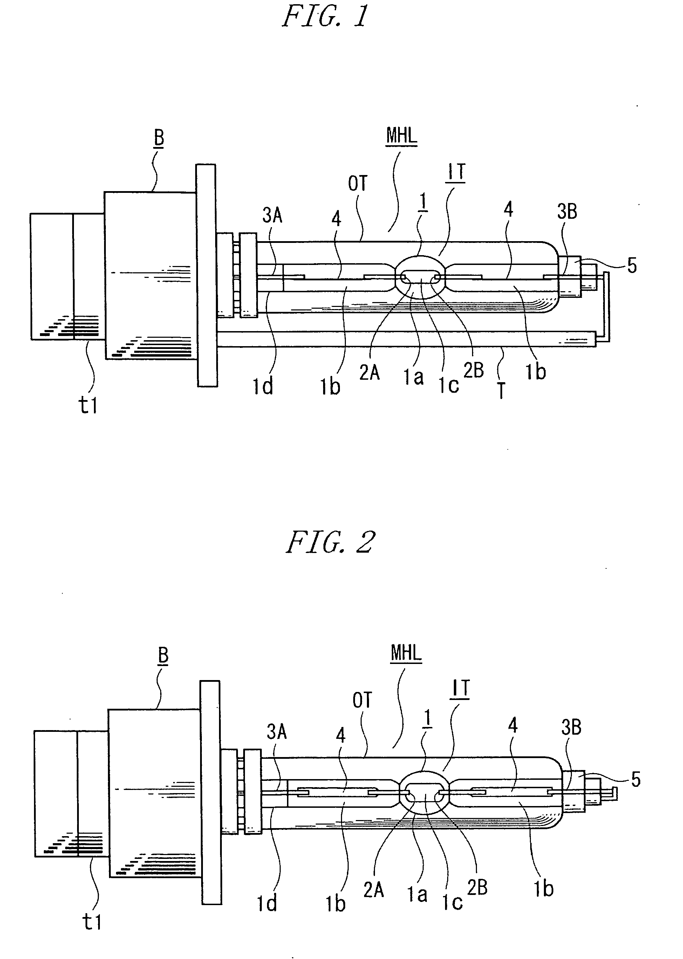

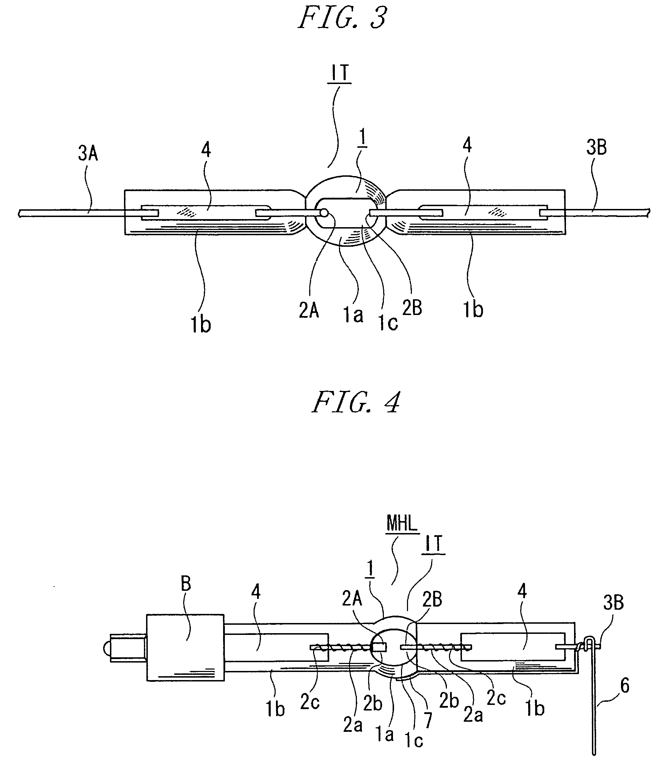

Figs. 1 to 3 show a metal halide lamp for an automobile head lamp as a first mode for putting the metal halide lamp of the present invention into practice. Fig. 1 is a front view of an entire lamp, Fig. 2 is a plan view, and Fig. 3 is an enlarged front view of a light emitting tube. A metal halide lamp MHL in the first mode is configured so that a high-frequency ripple current of a predetermined frequency superimposed on the dc basic wave flows at lighting and comprises a light emitting tube IT, an insulating tube T, an outer tube OT and a base B.

The light emitting tube IT is provided with a hermetic vessel 1, a pair of electrodes 2A, 2B, a pair of external lead-in wires 3A, 3B and a discharge medium.

The hermetic vessel 1 is made of silica glass and has the following configuration. That is, a surrounding portion 1a and a pair of sealing portions 1b are provided. The surrounding portion 1a has an outer shape molded in a spindle shape and the pair of elongated sealing portions 1b, 1b on its both ends, while an elongated and substantially columnar discharge space 1c is formed inside. The inner volume of the discharge space 1c is approximately 0.025 cc. Since the discharge space 1c is substantially columnar and elongated, it can relatively easily approach the discharge arc, and the temperature rise at an upper part of the hermetic vessel 1 is expedited.

Also, the surrounding portion 1a has a relatively large thickness. That is, it has the thickness substantially at the center portion of the distance between said pair of electrodes larger than the thickness on its both sides. Thus, since the heat conduction of the hermetic vessel 1 becomes favorable and temperature rise of the discharge medium adhering to the inner face of the lower part and the side part of the discharge space 1c of the hermetic vessel 1 is expedited, rising of the light flux is quickened.

The pair sealing portions 1b, 1b seal the surrounding portion 1a and loosely support shaft portions of the pair of electrodes 2A, 2B, which will be described later, which contributes to hermetic leading-in of an electric current from an operating circuit to the electrodes, and they extend integrally from both ends of the surrounding portion 1a. And in order to seal the pair of electrodes 2A, 2B and to lead in the electric current from the operating circuit to the electrode 1b in a hermetic manner, a sealing metal foil 4 as appropriate hermetic sealing and leading-in means is embedded inside in a hermetic manner.

The sealing metal foil 4 is made of molybdenum foil and embedded in the sealing portion 1b of the hermetic vessel 1 in a hermetic manner. The sealing metal foil 4 is embedded inside the sealing portion 1b of the hermetic vessel 1 and functions as an electric current conducting conductor in cooperation so that the sealing portion 1b keeps the inside of the surrounding portion 1a of the hermetic vessel 1 hermetic. A method for embedding the sealing metal foil 4 in the sealing portion 1b is not particularly limited, but a reduced pressure sealing method, a pinch seal method or the like can be employed, for example. When 5 atmospheres or more of a rare gas such as xenon (Xe) is to be sealed, the both can be applied in combination.

The electrode 2A functions as an anode and comprises an electrode shaft potion 2a and an electrode main portion 2b. The electrode shaft potion 2a is comprised by doped tungsten with the diameter of 0.35 mm. The electrode main portion 2b is, as shown in Fig. 3 in an enlarged manner, formed integrally at the tip end of the electrode shaft portion 2a and in a spherical state with the diameter of 0.6 mm.

The electrode 2B functions as a cathode and comprises an electrode shaft potion 2a and an electrode main portion 2b similarly to the electrode 2A. The electrode shaft potion 2a and the electrode main portion 2b are made of a single thoriated tungsten rod with the diameter of 0.35 mm, and a tip end portion becomes the electrode main portion and the other portions become the electrode shaft portion. The thoriated tungsten contains 1 mass% of thorium oxide.

Then, the pair of electrodes 2A, 2B have their electrode shaft portions 2a welded to the sealing metal foil 4 at the base ends, the intermediate portions loosely supported by the sealing portion 1b and the tip end portion and the electrode main portion 2b exposed in the discharge space 1c of the surrounding portion 1a in the hermetic vessel 1. In the surrounding portion 1a of the hermetic vessel 1, they are sealed inside the both ends in the axial direction while being separated and opposed, and the distance between said pair of electrodes is set to be a predetermined value.

In Fig. 1, after the left sealing portion 1b is formed, a part of the sealing tube 1d is not cut away but integrally extended in the tube axis direction from the end of the sealing portion 1b into the base B.

The pair of external lead-in wires 3A, 3B are disposed for supplying power to the pair of electrodes 2A, 2B. The tip ends of the pair of external lead-in wires 3A, 3B are welded to the other end of the sealing metal foil 4 in the sealing portion 1b at the both ends of the hermetic vessel 1 and the base end side is lead out to the outside. In Fig. 1, the external lead-in wire 3B led out of the hermetic vessel 1 to the right is folded at the intermediate portion along the outer tube OT, which will be described later, led into the base B, which will be described later, and connected to one base terminal t1, not shown. Also, in Fig. 1, the external lead-in wire 3A led out of the hermetic vessel 1 to the left is extended along the tube axis, led into the base B and connected to the other of the base terminals (not shown).

The discharge medium is sealed in the discharge space 1c formed inside the hermetic vessel 1 and contains a first halide made of a metal halide which contributes mainly to light emission, a second halide made of a metal halide which contributes mainly to formation of a lamp voltage, and a rare gas.

The outer tube OT has an ultraviolet-ray cutting function and accommodates the light emitting tube IT inside and its reduced diameter portions 5 at the both ends are glass-welded to the sealing portions 1b of the hermetic vessel 1. However, the inside is not hermetic but communicates with the outside air.

The insulating tube T covers the folded portion of the external lead-in wire 3B.

The base B is standardized for an automobile head lamp, in which the light emitting tube IT and the outer tube OT are planted along the center axis and supported, and configured so that it is detachably attached to the back face of the automobile head lamp.

Next, Examples in a first mode will be described.

[Example 1]

Light emitting tube IT

Hermetic vessel 1: Made of silica glass, spherical length 7 mm, maximum outer diameter 6 mm, the discharge space is substantially in the columnar shape with the maximum inner diameter of 2.6 mm.

Electrodes 2A, 2B: Distance between said pair of electrodes is 4.2 mm

Discharge medium

First halide: $ScI_3$ 0.10 mg + $NaI$ 0.25 mg
Second halide: $ZnI_2$ 0.15 mg
Rare gas: Xe10.5 atmospheres

Outer tube OT: Inner atmosphere is atmospheric pressure (outside air)
Lamp power at stability: 35 W
Lighting direction: Horizontal lighting
Lamp current: Basic wave - smoothed dc, lighted while varying the frequency of superimposed high-frequency ripple current.

In Example 1, results and evaluations of examination on presence of stable straightening when being lighted with the frequency of the superimposed high-frequency ripple current (hereinafter referred to as "ripple frequency") increased by 10 kHz from 70 kHz are as shown in Table 2.

In the table, Y stands for presence of straightening, N for absence of straightening, f1 for the first frequency, and f2 for the second frequency, respectively. Determination for presence of straightening shall be made when the center of the discharge arc is corrected within 0.3 mm from the axis connecting the electrodes at the center position between the electrodes.

[Table 2]

| Ripple frequency (kHz) | Result | Evaluation |
|---|---|---|
| 70 to 110 | N | Not available |
| 120,130 | Y | Available as f1 |
| 140 to 180 | N | Not available |
| 190,200 | Y | Available as f2 |
| 210,220 | N | Not available |

In the specification of Example 1, the first frequency f1 and the second frequency f2 obtained from the result of lighting tests similar to the above by making a metal halide discharge lamp in which the value of the maximum inner diameter of the hermetic vessel is changed between 2.0 to 4.0 mm by way of trial are shown in Table 3.

[Table 3]

| Maximum inner diameter of hermetic vessel (mm) | First frequency f1 (kHz) | Second frequency f2 (kHz) |
|---|---|---|
| 2.0 | 70 to 80 | 250 to 260 |
| 2.2 | 80 to 90 | 240 to 250 |
| 2.4 | 80 to 90 | 180 to 190 |
| 2.6 | 120 to 130 | 190 to 200 |
| 2.8 | 90 to 100 | 170 to 190 |
| 3.0 | 100 to 120 | 150 to 160 |
| 4.0 | 100 to 110 | 150 to 160 |

As can be seen from Table 3, the values of the first frequency f1 and the second frequency f2 are changed according to the maximum inner diameter of the hermetic vessel, but in either case, the predetermined frequency can be selected from the ranges of the equation 1, the equation 2 and Table 1.

Next, other Examples in the first mode of the present invention will be described below.

[Example 2]

Discharge medium

First halide: $ScI_3$ 0.10 mg + NaI 0.25 mg
Second halide: $MnI_2$ 0.15 mg

The other conditions are the same as those of Example 1.

[Example 3]

Discharge medium

First halide: $ScI_3$ 0.10 mg + NaI 0.25 mg
Second halide: None

The other conditions are the same as those of Example 1.

[Example 4]

Discharge medium

First halide: InI0.5mg
Second halide: None

The other conditions are the same as those of Example 1.

In Examples 2 to 4, results and evaluations of examination on presence of stable straightening when being lighted with the frequency of the superimposed high-frequency ripple current (hereinafter referred to as "ripple frequency") increased by 10 kHz from 70 kHz are the same as those shown in Table 2.

In the specification of Examples 2 to 4, the first frequency f1 and the second frequency f2 obtained from the result of lighting tests similar to the above by making a metal halide discharge lamp in which the value of the maximum inner diameter of the hermetic vessel is changed between 2.0 to 4.0 mm by way of trial are the same as those shown in Table 3.

From the above results of Examples 1 to 4, in the metal halide discharge lamp essentially not having mercury sealed, even if the type of the second halide is changed in the first mode of the present invention, when the maximum inner diameter of the hermetic vessel is the same, the ripple frequency by which stable straightening can be obtained shows substantially the same tendency both for the first frequency f1 and the second frequency f2.

<Second mode>

Fig. 4 is an enlarged front view of a light emitting tube illustrating a metal halide lamp for a liquid crystal projector as a second mode for putting the metal halide lamp of the present invention into practice. In this figure, the same portions as those shown in Figs. 1 to 3 are given the same reference numerals and the description will be omitted. In the figure, reference numeral 6 denotes a lead member and 7 a proximal conductor.

The hermetic vessel 1 is made of silica glass and the surrounding potion 1a is formed in a substantially spherical oval sphere.

The electrode 2A acting as an anode is made of doped tungsten and provided with the electrode shaft portion 2a, the electrode main portion 2b and a holding-in coil portion 2c. The electrode shaft portion 2a is a rod with the diameter of 0.7 mm. Its base end is welded to the sealing metal foil 4, which will be described later, with an intermediate portion loosely supported by the sealing portion 1b and the tip end portion is exposed inside the surrounding portion 1a of the hermetic vessel 1. The electrode main portion 2b has the diameter of 1.4 mm and length of 3.5 mm and is integrally formed at the tip end of the electrode shaft portion 2a. The holding-in coil portion 1c is wrapped at a portion opposed to a holding-in portion of the doped tungsten line at least by silica glass of the sealing portion 1b at the intermediate portion of the electrode shaft portion 2a with an appropriate pitch.

The electrode 2B acting as a cathode is provided with the electrode shaft portion 2a, the electrode main portion 2b and the holding-in coil portion 2c. The electrode shaft portion 2a is comprised by a single tungsten rod containing 1.0 mass % of thorium oxide with the diameter of 0.7 mm. Its base end is welded to the sealing metal foil 4, which will be described later, with the intermediate portion loosely supported by the sealing portion 1b, and the tip end portion is projected into the surrounding portion 1a of the hermetic vessel 1. The electrode main portion 2b is formed by the tip end portion itself of the electrode shaft portion 2a. The holding-in coil portion 1c is wrapped at a portion opposed to a holding-in portion of the doped tungsten line at least by silica glass of the sealing portion 1b at the intermediate portion of the electrode shaft portion 2a with an appropriate pitch.

The discharge medium is made from the first and second halides and the rare gas and sealed in the surrounding portion 1a.

The base B is connected to the conducting conductor 3A, not shown, and fixed to the sealing portion 1b by an inorganic adhesive to be used when the light emitting tube IT is mounted to a known reflecting mirror and connected to one of poles of the operating circuit, not shown.

The lead member 6 has its tip end portion connected to the lead-in conductor 3B on the right in the figure and the base end portion is connected to the other pole of the operating circuit.

The proximal conductor 7 has its tip end portion extended to a position proximal to the electrode 2A on the left in the figure, while the base end portion is connected to the lead-in conductor 3B on the right in the figure.

Next, Examples in the second mode will be described.

[Example 5]

Light emitting tube IT

Hermetic vessel 1: Made of silica glass, maximum inner diameter 6.0 mm
Electrodes 2A, 2B: Distance between said pair of electrodes is 2.0 mm
Discharge medium

First halide: $DyI_3$0.5 mg + $NdI_3$0.5 mg
Second halide: $ZnI_2$2.0 mg
Rare gas: Ar1.0 atmospheres

Lamp power at stability: 150 W
Lighting direction: Horizontal lighting
Lamp current: Basic wave - smoothed dc, lighted while varying the frequency of superimposed high-frequency ripple current.

In Example 5, results and evaluations of examination on presence of stable straightening when being lighted with the ripple frequency increased by 10 kHz from 70 kHz are as those shown in Table 4. Reference symbols are the same as those in Table 2.
[Table 4]

| Ripple frequency (kHz) | Result | Evaluation |
|---|---|---|
| 70 to 90 | N | Not available |
| 100, 110 | Y | Available as f1 |
| 120, 130 | N | Not available |
| 140, 150 | Y | Available as f2 |
| 160 to 220 | N | Not available |

In the specification of Example 5, the first frequency f1 and the second frequency f2 obtained from the result of lighting tests similar to the above by making a metal halide discharge lamp in which the value of the maximum inner diameter of the hermetic vessel is changed between 4.0 to 8.0 mm by way of trial are shown in Table 5.
[Table 5]

| Maximum inner diameter of hermetic vessel (mm) | First frequency f1 (kHz) | Second frequency f2 (kHz) |
|---|---|---|
| 4.0 | 100 to 110 | 150 to 160 |
| 5.0 | 110 to 120 | 150 to 160 |
| 6.0 | 110 to 120 | 140 to 150 |
| 7.0 | 110 to 120 | 140 to 160 |
| 8.0 | 100 to 110 | 140 to 150 |

As can be seen from Table 5, the values of the first frequency f1 and the second frequency f2 are changed according to the maximum inner diameter of the hermetic vessel, but in either case, the predetermined frequency can be selected from the ranges of the equation 1, the equation 2 and Table 1.
Next, other Examples in the second mode of the present invention will be described below.

[Example 6]

Discharge medium

First halide: $DyI_3$0.5 mg + $NdI_3$0.5 mg
Second halide: $MnI_2$2.0 mg

The other conditions are the same as those of Example 5.

[Example 7]

Discharge medium

First halide: $DyI_3$0.5 mg + $NdI_3$0.5 mg
Second halide: None

The other conditions are the same as those of Example 5.
In Examples 6 and 7, results and evaluations of examination on presence of stable straightening when being lighted with the frequency of the superimposed high-frequency ripple current (hereinafter referred to as "ripple frequency") increased by 10 kHz from 70 kHz are the same as those shown in Table 4.
In the specification of Examples 6 and 7, the first frequency f1 and the second frequency f2 obtained from the result of lighting tests similar to the above by making a metal halide discharge lamp in which the value of the maximum inner diameter of the hermetic vessel is changed between 4.0 to 8.0 mm by way of trial are shown in Table 5.
From the above results of Examples 5 to 7, in the metal halide discharge lamp essentially not having mercury sealed, even if the type of the second halide is changed in the second mode of the present invention, when the maximum inner diameter of the hermetic vessel is the same, the ripple frequency by which stable straightening can be obtained shows substantially the same tendency.

<Third mode>

This mode is a metal halide lamp in the same structure as that of the second mode shown in Fig. 4 and has the maximum inner diameter of the hermetic vessel at 10 mm, but the distance between said pair of electrodes is set to 2 mm.
Next, Examples in the third mode will be described.

[Example 8]

Light emitting tube IT

Hermetic vessel 1: Made of silica glass, maximum inner diameter 10.0 mm
Electrodes 2A, 2B: Distance between said pair of electrodes is 2.0 mm
Discharge medium

First halide: $DyI_3$1.0 mg + $NdI_3$1.0 mg
Second halide: $ZnI_2$4.0 mg
Rare gas: Ar1.0 atmospheres

Lamp power at stability: 250 W
Lighting direction: Horizontal lighting
Lamp current: Basic wave - smoothed dc, lighted while varying the frequency of superimposed high-frequency ripple current.

In Example 8, results and evaluations of examination on presence of stable straightening when being lighted with the ripple frequency increased by 10 kHz from 70 kHz are as those shown in Table 6. Reference symbols are the same as those in Table 2.
[Table 6]

| Ripple frequency (kHz) | Result | Evaluation |
| --- | --- | --- |
| 70 to 80 | N | Not available |
| 90, 100 | Y | Available as f1 |
| 110 | N | Not available |
| 120, 130 | Y | Available as f2 |
| 140 to 220 | N | Not available |

In the specification of Example 8, the first frequency f1 and the second frequency f2 obtained from the result of lighting tests similar to the above by making a metal halide discharge lamp in which the value of the maximum inner diameter of the hermetic vessel is changed between 6.0 to 12.0 mm by way of trial are shown in Table 7.
[Table 7]

| Maximum inner diameter of hermetic vessel (mm) | First frequency f1 (kHz) | Second frequency f2 (kHz) |
| --- | --- | --- |
| 6.0 | 110 to 120 | 140 to 150 |
| 7.0 | 110 to 120 | 140 to 160 |
| 8.0 | 100 to 110 | 140 to 150 |
| 9.0 | 110 to 120 | 130 to 140 |
| 10.0 | 100 to 110 | 120 to 130 |
| 11.0 | 100 to 110 | 130 to 140 |
| 12.0 | 100 to 110 | 140 to 150 |

As can be understood from Table 7, the values of the first frequency f1 and the second frequency f2 are changed according to the maximum inner diameter of the hermetic vessel, but in either case, the predetermined frequency can be selected from the ranges of the equation 1, the equation 2 and Table 1.

Next, other Examples in the second mode of the present invention will be described below.

[Example 9]

Discharge medium

First halide: $DyI_3$ 1.0 mg + $NdI_3$ 1.0 mg
Second halide: $MnI_2$ 4.0 mg

The other conditions are the same as those of Example 8.

[Example 10]

Discharge medium

First halide: $DyI_3$ 1.0 mg + $NdI_3$ 1.0 mg
Second halide: None

The other conditions are the same as those of Example 8.
In Examples 9 and 10, results and evaluations of examination on presence of stable straightening when being lighted with the frequency of the superimposed high-frequency ripple current (hereinafter referred to as "ripple frequency") increased by 10 kHz from 70 kHz are the same as those shown in Table 6.

In the specification of Examples 9 and 10, the first frequency f1 and the second frequency f2 obtained from the result of lighting tests similar to the above by making a metal halide discharge lamp in which the value of the maximum inner diameter of the hermetic vessel is changed between 6.0 to 12.0 mm by way of trial are shown in Table 7.

From the above results of Examples 8 to 7, in the metal halide discharge lamp essentially not having mercury sealed, even if the type of the second halide is changed in the second mode of the present invention, when the maximum inner diameter of the hermetic vessel is the same, the ripple frequency by which stable straightening can be obtained shows substantially the same tendency.

<Fourth mode>

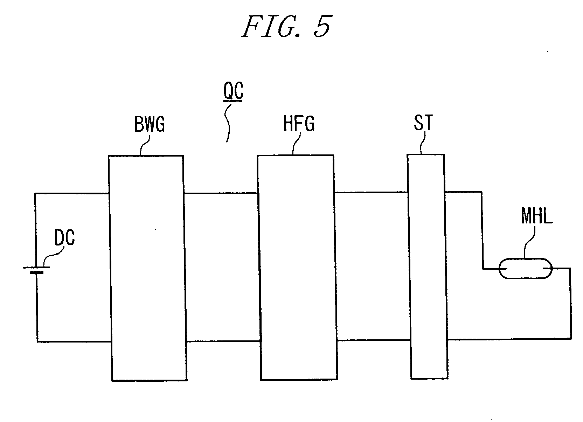

Fig. 5 is a circuit block diagram illustrating a mode for putting the metal halide discharge lamp system of the present invention into practice. In this figure, the metal halide discharge lamp system comprises a metal halide discharge lamp MHL, an operating circuit OC, and a starting circuit ST. The operating circuit OC is provided with a basic waveform generation circuit BWG and a high-frequency component superimposition circuit HFG.

The metal halide discharge lamp MHL is comprised by the lamp of the first mode shown in Figs. 1 to 3, the second mode or the third mode shown in Fig. 4.

The operating circuit OC is a circuit for maintaining lighting by biasing the metal halide discharge lamp MHL and includes appropriate limiting impedance connected to the metal halide discharge lamp MHL in series. The biasing of the metal halide discharge lamp MHL is carried out by supplying a voltage, current or power in a mode where a basic waveform is superimposed with a high frequency in ac or dc to the lamp.

As the above high frequency, a frequency that the discharge arc of the discharge medium in the lamp is corrected to the straight direction connecting the electrodes using the acoustic resonance phenomenon is selected. That is, such a frequency that, by supplying the voltage, current or power of the above frequency to the lamp, the acoustic resonance phenomenon is generated in a direction crossing the straight line connecting the electrodes and as a result, the discharge arc is corrected to a substantially straight state. Such a frequency is equal to an acoustic resonance frequency determined by a sonic speed of the discharge medium existing in the discharge space of the metal halide discharge lamp and the length of the discharge space in a direction crossing the straight line connecting the electrodes. Alternatively, the high-frequency may be in a mode that the frequency is changed within a predetermined range including the above acoustic resonance frequency.

Also, the waveform of the high-frequency voltage, current or power is a waveform whose instantaneous value is changed with time and can be selected from a sinusoidal wave, a triangular wave, a saw-tooth wave, a stepped wave, an exponential wave and a complex wave of two or more of them. The basic waveform portion of the current supplied to the lamp mainly supplies energy generating the discharge arc. Also, the basic wave allows an appropriate waveform such as a rectangular wave and a sinusoidal wave.

The operating circuit OC is provided with a dc power source DC, the basic waveform generation circuit BWG, and the high-frequency component superimposition circuit HFG.

The dc power source DC functions as a dc power source for the basic waveform generation circuit BWG and the high-frequency component superimposition circuit HFG. The dc power source DC can be comprised by a rectified dc power source that obtains a direct current by rectifying a low-frequency ac and a battery power source.

The basic waveform generation circuit BWG generates ac or dc voltage, current or power as the above basic wave. In the case of ac, this can be generated by using an inverter. A dc - dc conversion circuit such as a dc chopper may be set before the inverter as desired. By this, the ac voltage, current or power can be controlled more easily. On the other hand, in the case of dc, a dc - dc conversion circuit such as a dc chopper can be used for generating this.

The high-frequency component superimposition circuit HFG generates the above high frequency to be superimposed on the basic wave. This can be comprised by an inverter, for example.

The operating circuit OC includes the limiting impedance connected to the metal halide discharge lamp MHL in series as mentioned above, but as the.limiting impedance, inductance with an appropriate value is preferably used by using an inductor, for example.

Moreover, the operating circuit OC can be comprised by a lamp current slope control characteristic that a lamp current more than a rated lamp current is supplied immediately after start of the metal halide discharge lamp MHL and the lamp current is sequentially reduced as time elapses to be settled at a rated current. This configuration is suitable for lighting of the metal halide discharge lamp used for a head lamp for a vehicle.

Furthermore, the operating circuit OC is allowed to be comprised by feedback control circuit means that detects a lamp characteristic of the metal halide discharge lamp MHL and matches the frequency of the high-frequency component to be superimposed on the basic wave component with the acoustic resonance frequency.

The starting circuit ST generates a high-voltage pulse or the like at start of the metal halide discharge lamp MHL and applies it to the lamp so as to facilitate the starting. Therefore, the starting circuit ST is preferably disposed between the metal halide discharge lamp MHL and the limiting impedance.

Then, in the metal halide discharge lamp system of this mode, the discharge medium in the metal halide discharge lamp does not essentially contain mercury, and though the discharge arc is easy to be curved more strongly than the metal halide discharge lamp containing mercury, because of the above-mentioned configuration, a stationary wave by the acoustic resonance is formed in a direction crossing a virtual straight line connecting the electrodes and the discharge arc is corrected to substantially straight state along the above straight direction.

The reason why the discharge arc is corrected to substantially straight state is considered as follows. That is, by periodic fluctuation of the voltage, current or power supplied to the metal halide discharge lamp MHL, a periodic fluctuation of a gas pressure occurs in the discharge arc. The periodic fluctuation of the gas pressure progresses from the entire circumferential direction of the tube axis toward the inner wall surface of the hermetic vessel 1 as a compressional wave (traveling wave), is reflected by the inner wall surface and becomes a reflective wave. Thus, in the vicinity of the discharge arc, the traveling wave collides with the reflected wave and if there is a difference between displacements of the both waves, the discharge arc is considered to be moved to a position where the displacements of the both waves are smaller and corrected to substantially straight state.

When the voltage, current or power of the acoustic resonance frequency, which is a high frequency, is supplied to the metal halide discharge lamp MHL, in the section of the discharge space in the direction crossing the virtual straight line connecting the electrodes, at a position where the discharge arc is equidistant to the inner wall surface of the surrounding portion (if the section is a circle, at the center of the circle, for example), the displacements of the traveling wave and the reflected wave can be controlled at the same level in the vicinity including the discharge arc, and as a result, stable lighting is enabled without movement of discharge arc. At this time, the two compressional waves (traveling wave and reflected wave) interfere with each other in the above section and a stationary wave is generated.

When the length of the discharge space in the direction crossing the discharge arc is set as the length of the section crossing the virtual straight line connecting the electrodes, the discharge arc is not moved but is stabilized at the center of the section equidistant to the inner surface of the surrounding portion, and the shape of the discharge arc becomes straight.

**Claims**

1.  A metal halide discharge lamp comprising:

    a fire-resistant and light-transmitting hermetic vessel with a maximum inner diameter of 2.0 to 12.0 mm;
    a pair of electrodes sealed within the hermetic vessel; and
    a discharge medium containing a halide and a rare gas and essentially not containing mercury and sealed within the hermetic vessel,

    wherein a discharge arc is stably corrected into a straight state even if the lamp is lighted when an electric current superimposed with a ripple current with either of a predetermined frequency in a range of a relatively low first frequency f1 satisfying an equation 1 (unit: kHz) and a predetermined frequency in a range of a relatively high second frequency f2 satisfying an equation 2 (unit: kHz) is flown in the hermetic vessel

$$[\text{Equation 1}]$$

$$70 \leq f1 \leq 130$$

$$[\text{Equation 2}]$$

$$120 \leq f2 \leq 260$$

2.  The metal halide discharge lamp according to claim 1, wherein the ranges of the first frequency f1 and the second frequency f2 are in ranges specified in Table 1 according to the maximum inner diameter (mm) of the hermetic vessel.

[Table 1]

| Maximum inner diameter of hermetic vessel (mm) | First frequency f1 (kHz) | Second frequency f2 (kHz) |
|---|---|---|
| 2.0 | 70 to 80 | 250 to 260 |

(continued)

| Maximum inner diameter of hermetic vessel (mm) | First frequency f1 (kHz) | Second frequency f2 (kHz) |
|---|---|---|
| 2.2 to 2.8 | 80 to 130 | 170 to 250 |
| 3.0 to 12.0 | 100 to 120 | 120 to 160 |

3. The metal halide discharge lamp according to claim 1 or 2, wherein in the discharge medium, halides contain first and second halides, in which the first halide is a metal halide mainly for light emission, while the second halide is a metal halide having a relatively large vapor pressure and a relatively small light emission amount in a visible region as compared with the first metal halide.

4. The metal halide discharge lamp according to any of claims 1 to 3, wherein the lamp is lighted with a predetermined frequency of the ripple current at a predetermined frequency in the range of the second frequency f2.

5. A metal halide discharge lamp system comprising:

a metal halide discharge lamp according to any one of claims 1 to 4; and
an operating circuit constructed to supply an electric current having a frequency component generating an acoustic resonance phenomenon in a direction crossing a straight line connecting the electrodes of the metal halide discharge lamp to the metal halide discharge lamp, and to light the lamp.

## FIG. 1

## FIG. 2

## FIG. 3

## FIG. 4

*FIG. 5*

## INTERNATIONAL SEARCH REPORT

| International application No. |
|---|
| PCT/JP2006/305844 |

A.  CLASSIFICATION OF SUBJECT MATTER
*H05B41/24*(2006.01), *H01J61/88*(2006.01), *H01J61/12*(2006.01), *H01J61/30* (2006.01)

According to International Patent Classification (IPC) or to both national classification and IPC

B.  FIELDS SEARCHED

Minimum documentation searched (classification system followed by classification symbols)
H05B41/14-41/298, H01J61/00-61/28

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 8-195288 A (Matsushita Electric Industrial Co., Ltd.), 30 July, 1996 (30.07.96), Full text; all drawings & US 5773937 A Full text; all drawings & EP 0713352 A2 Full text; all drawings | 1-5 |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 April, 2006 (17.04.06) | 25 April, 2006 (25.04.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

<table>
<tr><td colspan="2" align="center">**INTERNATIONAL SEARCH REPORT**</td><td colspan="2">International application No.<br>PCT/JP2006/305844</td></tr>
<tr><td colspan="4">C (Continuation).   DOCUMENTS CONSIDERED TO BE RELEVANT</td></tr>
<tr><td>Category*</td><td colspan="2">Citation of document, with indication, where appropriate, of the relevant passages</td><td>Relevant to claim No.</td></tr>
<tr><td>Y</td><td colspan="2">JP 11-238488 A (Toshiba Lighting & Technology Corp.),<br>31 August, 1999 (31.08.99),<br>Claim 1<br>& JP 2002-093369 A    & JP 2003-162976 A<br>& JP 2003-178710 A    & JP 2005-019421 A<br>& US 2002/0047526 A1<br>Claim 1<br>& US 6353289 B1    & US 2003/0209986 A1<br>& EP 0883160 A1    & EP 1296354 A2</td><td>1-5</td></tr>
</table>

Form PCT/ISA/210 (continuation of second sheet) (April 2005)

**EP 1 883 278 A1**

## REFERENCES CITED IN THE DESCRIPTION

### Patent documents cited in the description

- JP 7009835 A
- JP 3189609 B
- JP 11238488 A